# EUROPEAN PATENT APPLICATION

(11) **EP 3 808 504 A1**
(43) Date of publication of application: **21.04.2021**
(21) Application number: 20786429.9
(22) Date of filing: 27.08.2020
(51) Int. Cl.: B24C 5/06, B24D 9/00

(54) **IMPELLER DEVICE FOR SHOT PEENING MACHINE AND SHOT PEENING MACHINE**

(30) Priority: 06.09.2019 CN 201910844040
(71) Applicant: Kunshan Airbag Packing Corp, Suzhou City, Jiangsu 215325 (CN)
(72) Inventor: LIAO, Kao Hsiung, Suzhou city, Jiangsu 215325 (CN); LIAO, Tai An, Suzhou city, Jiangsu 215325 (CN); LIAO, Ping Yuan, Suzhou city, Jiangsu 215325 (CN); KAO, Tsai Ming, Suzhou city, Jiangsu 215325 (CN)
(74) Representative: Gille Hrabal Partnerschaftsgesellschaft mbB Patentanwälte
(86) International application number: PCT/CN2020/111806
(87) International publication number: WO 2021/043065

(57) **Abstract**

A shot blasting machine includes a shot processing assembly, at least one impeller assembly, a collecting assembly, and a lifting assembly. The at least one impeller assembly includes a pair of rotary plates, a plurality of impeller blades, a plurality of connecting rods, and a protective case body. Each of the rotary plates has a central hole, a plurality of impeller blade grooves, and a plurality of limiting recesses. Each of the plurality of impeller blade grooves has a groove bottom part that is adjacent to the central hole and a groove top part that is adjacent to a circumference of each of the pair of rotary plates. Each of the plurality of impeller blades including a vane part and a pair of blade side parts that are connected to two sides of the vane part, and each of the blade side part has a limiting protrusion.

## Description

### CROSS-REFERENCE TO RELATED PATENT APPLICATION

This application claims the benefit of priority to Taiwan Patent Application No. 108132992, filed on September 12, 2019. The entire content of the above identified application is incorporated herein by reference.

Some references, which may include patents, patent applications and various publications, may be cited and discussed in the description of this disclosure. The citation and/or discussion of such references is provided merely to clarify the description of the present disclosure and is not an admission that any such reference is "prior art" to the disclosure described herein. All references cited and discussed in this specification are incorporated herein by reference in their entireties and to the same extent as if each reference was individually incorporated by reference.

### FIELD OF THE DISCLOSURE

The present disclosure relates to a shot blasting machine and an impeller assembly thereof, and more particularly to a shot blasting machine that is capable of combining advantages of sand blasting and shot peening, with the impeller assembly being able to shoot shots at a high speed, so as to form a matte surface or an eroded surface on a surface of a workpiece to be processed.

### BACKGROUND OF THE DISCLOSURE

Sand blasting is one of the conventional methods for surface finishing of a workpiece. It is commonly seen in sand blasting to shoot a blasting material onto a surface of a workpiece at a high speed by using compressed air as power, so that an exterior or a shape of the workpiece is changed. Due to impact and cutting done by the blasting material on the surface of the workpiece, the surface of the workpiece is cleaned to a certain extent and can have different degrees of roughness. However, when the compressed air is used as the power to accelerate sand blasting, the shooting speed of the blasting material is subjected to a certain limitation.

Another similar method for surface finishing is shot peening, which is to have the surface of the workpiece be continuously struck with a plurality of round and small steel beads. Each of the plurality of steel beads strikes the surface of the workpiece (e.g. a metal component) makes a small indentation or a recess, so that the surface can be hardened to thereby achieve the effect of increased hardness. During the process of shot peening, a plurality of recesses are formed on the surface of the workpiece, and a surface layer of the metal component is extended, so as to further increase the hardness of the surface of the workpiece.

The main function of sand blasting is to clean and to enhance the roughness of a surface, so as to facilitate the following processes. On the other hand, shot peening focuses on increasing fatigue resistance, stress corrosion resistance, and the surface hardness of the workpiece, so as to achieve the effect of extending the service life of the workpiece.

Compared to sand blasting, shot peening machines, including equipment for increasing the speed of shot peening beads and surrounding walls of an area for processing the workpiece, are easily damaged, given that shot peening materials used by the shot peening machines are relatively larger in particle diameter.

The present disclosure provides a shot blasting machine that combines the advantages of both sand blasting and shot peening. The impeller assembly of the shot blasting machine is able to shoot shots at a high speed, and particle diameters of the shots are between that of the blasting material for sand blasting and that of the steel beads for shot peening. Therefore, the shot blasting machine can not only provide a cleaning effect and enhance the surface roughness, but also increase the fatigue resistance and the surface hardness of the workpiece, thereby extending the service life of the workpiece.

### SUMMARY OF THE DISCLOSURE

In response to the above-referenced technical inadequacies, the present disclosure provides a shot blasting machine and an impeller assembly thereof.

In one aspect, the present disclosure provides an impeller assembly of a shot blasting machine, including a pair of rotary plates, a plurality of impeller blades, a plurality of connecting rods, and a protective case body. Each of the pair of rotary plates includes a central hole, a plurality of impeller blade grooves, and a plurality of limiting recesses. The plurality of impeller blade grooves extend from the central hole toward a circumference of each of the pair of rotary plates. Each of the plurality of impeller blade grooves has a groove bottom part that is adjacent to the central hole and a groove top part that is adjacent to the circumference of each of the pair of rotary plates, and an inner groove width of the groove bottom part is greater than an inner groove width of the groove top part. The plurality of limiting recesses are further recessed in the plurality of impeller blade grooves. Each of the plurality of impeller blades includes a vane part and a pair of blade side parts, the pair of blade side parts are connected to two sides of the vane part, and each of the blade side part has a limiting protrusion. One of the blade side parts of each of the plurality of impeller blades is accommodated in one of the plurality of impeller blade grooves, and the limiting protrusion is accommodated in the limiting recess. A shape of the pair of blade side parts corresponds to a shape of the plurality of impeller blade grooves. Each of the pair of blade side parts has a root thickness corresponding to the groove bottom part and a top thickness corresponding to the groove top part, and the root thickness is greater than the top thickness. The plurality of connecting rods are connected to the pair of rotary plates. The protective case body covers the pair of rotary plates and the plurality of impeller blades, and defines a blast-exiting plane. The protective case body includes a front inclined baffle and a back baffle, the back baffle is substantially orthogonal to the blast-exiting plane, and the front inclined baffle is inclined toward the blast-exiting plane.

In another aspect, the present disclosure provides a shot blasting machine including a shot processing assembly, at least one impeller assembly, a collecting assembly, and a lifting assembly. The shot processing assembly, which is used to process the shots, includes an output part. The at least one impeller assembly is positioned under the output part, and receives the shots. Each of the at least one impeller assembly includes a pair of rotary plates, a plurality of impeller blades, a plurality of connecting rods, and a protective case body. Each of the pair of rotary plates includes a central hole, a plurality of impeller blade grooves, and a plurality of limiting recesses. The plurality of impeller blade grooves extend from the central hole toward a circumference of each of the pair of rotary plates. Each of the plurality of impeller blade grooves has a groove bottom part that is adjacent to the central hole and a groove top part that is adjacent to the circumferences of each of the pair of rotary plates. An inner groove width of the groove bottom part is greater than an inner groove width of the groove top part. The plurality of limiting recesses are further recessed in the plurality of impeller blade grooves. Each of the plurality of impeller blades includes a vane part and a pair of blade side parts, the pair of blade side parts are connected to two sides of the vane part, and each of the blade side part has a limiting protrusion. One of the blade side parts of each of the plurality of impeller blades is accommodated in one of the plurality of impeller blade grooves, and the limiting protrusion is accommodated in the limiting recess. A shape of the pair of blade side parts corresponds to a shape of the plurality of impeller blade grooves. Each of the pair of blade side parts has a root thickness corresponding to the groove bottom part and a top thickness corresponding to the groove top part, and the root thickness is greater than the top thickness. The plurality of connecting rods are connected to the pair of rotary plates. The protective case body covers the pair of rotary plates and the plurality of impeller blades, and defines a blast-exiting plane. The protective case body includes a front inclined baffle and a back baffle, the back baffle is substantially orthogonal to the blast-exiting plane, and the front inclined baffle is inclined toward the blast-exiting plane. The collecting assembly is positioned under the at least one impeller assembly, so as to collect the shots. The lifting assembly transports the shots that are collected back to the shot processing assembly.

One of the advantages of the present disclosure is that, through utilizing the centrifugal force generated when the plurality of impeller blades are rotating at a high speed, the plurality of impeller blades are more tightly engaged with the plurality of impeller blade grooves of each of the pair of rotary plates. This configuration can be easily manufactured and assembled, which is beneficial in increasing the speed of the shots for surface finishing, and enhancing the effect of surface finishing.

These and other aspects of the present disclosure will become apparent from the following description of the embodiment taken in conjunction with the following drawings and their captions, although variations and modifications therein may be affected without departing from the spirit and scope of the novel concepts of the disclosure.

### BRIEF DESCRIPTION OF THE DRAWINGS

The present disclosure will become more fully understood from the following detailed description and accompanying drawings.
FIG. 1 is an exploded perspective view of an impeller assembly of a shot blasting machine of the present disclosure.
FIG. 2 is another exploded perspective view of the impeller assembly of the shot blasting machine of the present disclosure.
FIG. 3 is a front view of a rotary plate and a plurality of impeller blades of the present disclosure.

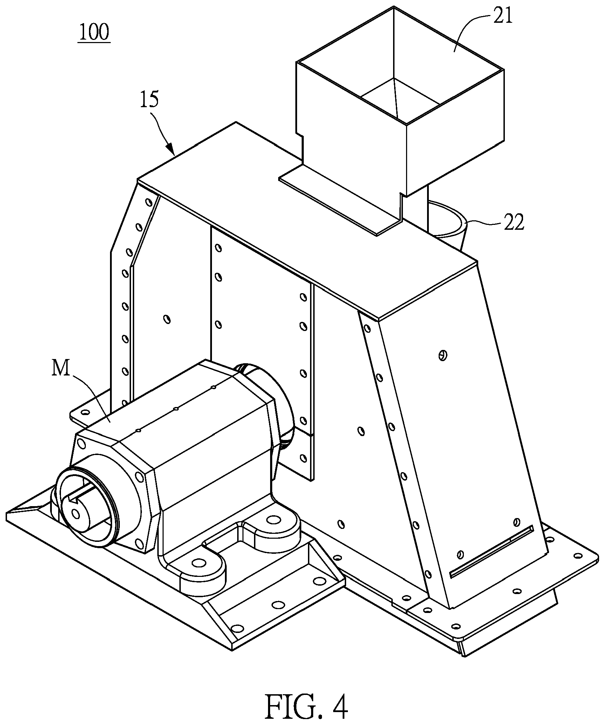

FIG. 4 is an assembled perspective view of the impeller assembly of the shot blasting machine of the present disclosure.
FIG. 5 is an inner side view of the impeller assembly of the shot blasting machine of the present disclosure.
FIG. 6 is a partial sectional view of the impeller assembly of the shot blasting machine of the present disclosure.
FIG. 7 is a front view of a strip processing shot blasting machine of the present disclosure.
FIG. 8 is a side view of the strip processing shot blasting machine of the present disclosure.
FIG. 9 is a front view of a hanger type shot blasting machine of the present disclosure.
FIG. 10 is a front view of a tumble and drum shot blasting machine of the present disclosure.
FIG. 11 is a front view of a horizontal load conveyor shot blasting machine of the present disclosure.

### DETAILED DESCRIPTION OF THE EXEMPLARY EMBODIMENTS

The present disclosure is more particularly described in the following examples that are intended as illustrative only since numerous modifications and variations therein will be apparent to those skilled in the art. Like numbers in the drawings indicate like components throughout the views. As used in the description herein and throughout the claims that follow, unless the context clearly dictates otherwise, the meaning of "a", "an", and "the" includes plural reference, and the meaning of "in" includes "in" and "on". Titles or subtitles can be used herein for the convenience of a reader, which shall have no influence on the scope of the present disclosure.

The terms used herein generally have their ordinary meanings in the art. In the case of conflict, the present document, including any definitions given herein, will prevail. The same thing can be expressed in more than one way. Alternative language and synonyms can be used for any term(s) discussed herein, and no special significance is to be placed upon whether a term is elaborated or discussed herein. A recital of one or more synonyms does not exclude the use of other synonyms. The use of examples anywhere in this specification including examples of any terms is illustrative only, and in no way limits the scope and meaning of the present disclosure or of any exemplified term. Likewise, the present disclosure is not limited to various embodiments given herein. Numbering terms such as "first", "second" or "third" can be used to describe various components, signals or the like, which are for distinguishing one component/signal from another one only, and are not intended to, nor should be construed to impose any substantive limitations on the components, signals or the like.

### [First Embodiment]

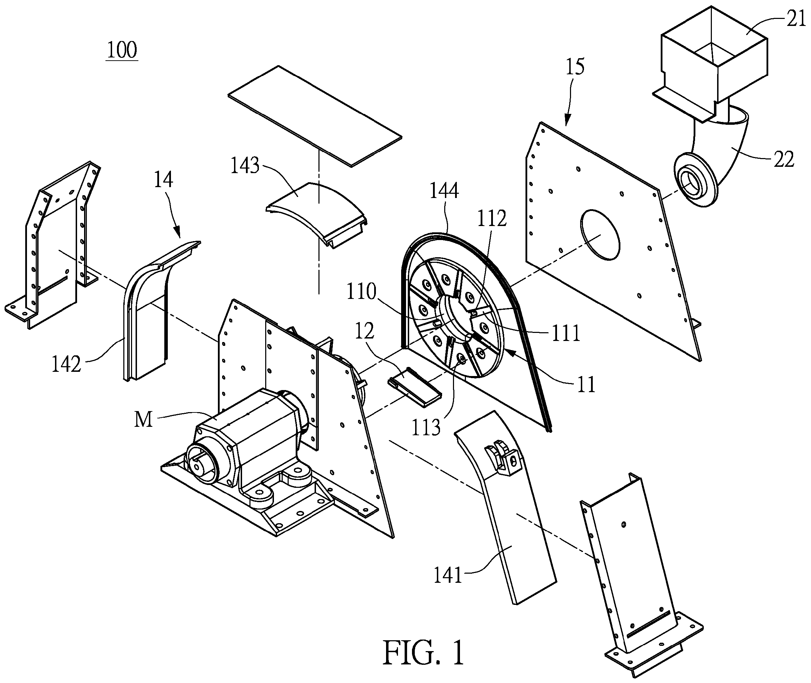

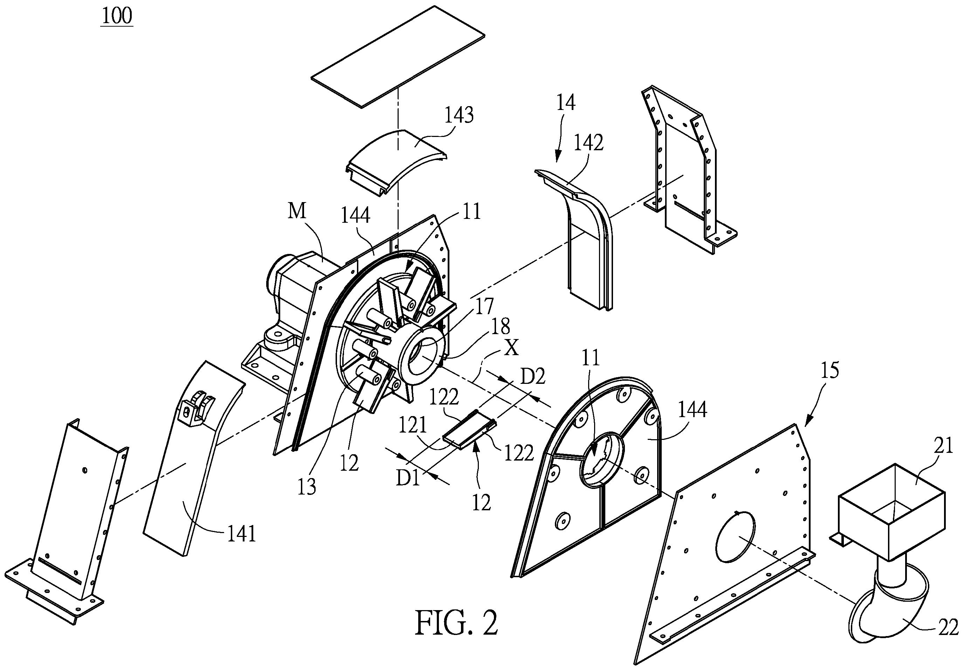

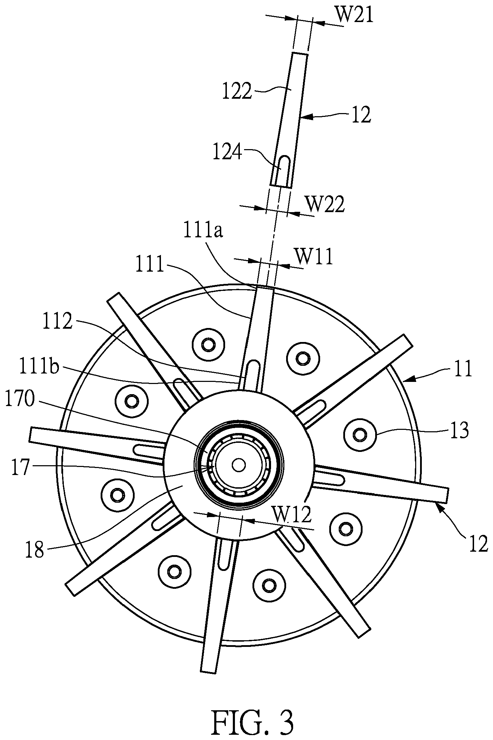

Referring to FIG. 1 to FIG. 3, the present disclosure provides an impeller assembly 100 of a shot blasting machine. The impeller assembly includes a pair of rotary plates 11, a plurality of impeller blades 12, a plurality of connecting rods 13, and a protective case body 14. In this embodiment, the pair of rotary plates 11 are in a shape of a round disk, and the pair of rotary plates 11 are disposed relative to each other. Each of the pair of rotary plates 11 includes a central hole 110, a plurality of impeller blade grooves 111, and a plurality of limiting recesses 112. The central hole 110 penetrates through each of the pair of rotary plates 11. The plurality of impeller blade grooves 111 are arranged at equiangular intervals and extend radially from the central hole 110 toward a circumference of each of the pair of rotary plates 11. Each of the plurality of impeller blade grooves 111 has a groove bottom part 111b that is adjacent to the central hole 110 and a groove top part 111a that is adjacent to the circumference of each of the pair of rotary plates 11, and an inner groove width W12 of the groove bottom part 111b is greater than an inner groove width W11 of the groove top part 111a. The plurality of limiting recesses 112 are further recessed in the plurality of impeller blade grooves 111.

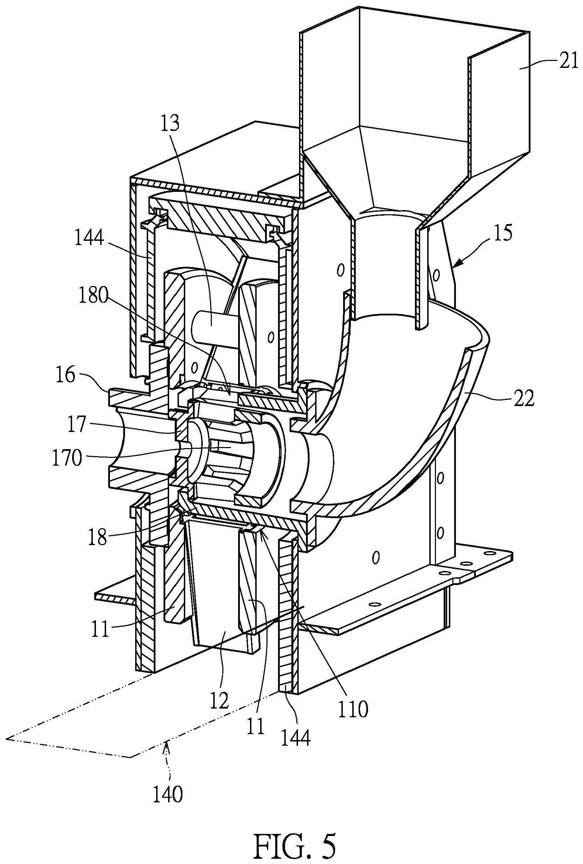

In this embodiment, each of the plurality of impeller blades 12 has a shape of the alphabet "I" from both a top view and a bottom view. The plurality of impeller blades 12 are arranged radially and at equiangular intervals from a center of one of the pair of rotary plates 11. Preferably, a quantity of the plurality of impeller blades 12 is an even number, and each of the plurality of impeller blades 12 is arranged along a diameter direction (as shown in FIG. 5). Each of the plurality of impeller blades 12 includes a vane part 121 and a pair of blade side parts 122, and the vane part 121 has a thickness that is substantially consistent. The pair of blade side parts 122 are connected to two sides of the vane part 121, and each of the blade side part 122 has a limiting protrusion 124. One of the blade side parts 122 is accommodated in one of the plurality of impeller blade grooves 111, and the limiting protrusion 124 is accommodated in the limiting recess 112. A shape of the pair of blade side parts 122 corresponds to a shape of the plurality of impeller blade grooves 111. Each of the pair of blade side parts 122 has a root thickness W22 corresponding to the groove bottom part 111b and a top thickness W21 corresponding to the groove top part 111a, and the root thickness W22 is greater than the top thickness W21. In this embodiment, each of the plurality of limiting recesses 112 is adjacent to the groove bottom part 111b.

The present disclosure is able to restrict displacement of the plurality of impeller blades 12 under a high speed rotation, through the uniquely designed shape of the plurality of impeller blade grooves 111 of each of the pair of rotary plates 11. In the present disclosure, the centrifugal force generated when the plurality of impeller blades 12 are rotating at a high speed is utilized so that the plurality of impeller blades 12 are more outwardly and tightly engaged with the plurality of impeller blade grooves 111 of each of the pair of rotary plates 11. This configuration does not require assembling methods such as nuts and bolts or welding. In addition, due to a root width D2 being greater than a top width D1 of each of the plurality of impeller blades 12 along a direction that is parallel to an axis X, the plurality of impeller blades 12 are more tightly engaged with each of the pair of rotary plates 11.

In this embodiment, the plurality of connecting rods 13 are in a shape of a cylindrical rod. The plurality of connecting rods 13 are connected to the pair of rotary plates 11, such that the pair of rotary plates 11 can be evenly and stably connected to each other. Each of the plurality of connecting rods 13 is disposed between two of the plurality of impeller blades 12, and two sides of each of the plurality of connecting rods 13 are respectively fixed to, e.g., bolted on, one of a plurality of affixing recesses 113 of each of the pair of rotary plates 11.

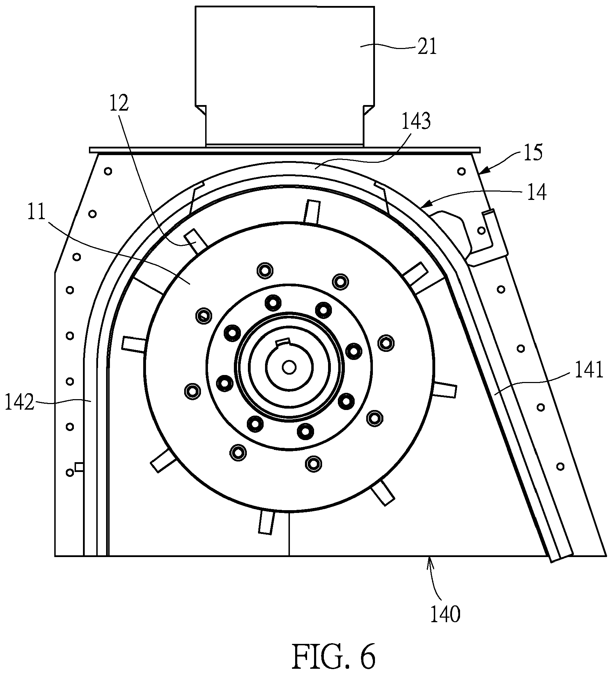

The protective case body 14 covers the pair of rotary plates 11 and the plurality of impeller blades 12, and defines a blast-exiting plane 140. In this embodiment, the protective case body 14 is used for restricting the shots to be inside the protective case body 14. As such, the protective case body 14 has a sufficient wall thickness to prevent from being shot through. The protective case body 14 includes a front inclined baffle 141 and a back baffle 142, the back baffle 142 is substantially orthogonal to the blast-exiting plane 140, and the front inclined baffle 141 is inclined to the blast-exiting plane 140. As shown in FIG. 6, a top part of each the plurality of impeller blades 12 protrudes out of the circumference of the pair of rotary plates 11. In this embodiment, the shots can be ceramic sand, glass beads, nylon sand, quartz sand, emery, iron sand, metal pellets, etc.

The protective case body 14 further includes an upper curved board 143 and a pair of side protective boards 144. Two ends of the upper curved board 143 are connected to the front inclined baffle 141 and an upper edge of the back baffle 142, respectively. The pair of side protective boards 144 are correspondingly positioned at two sides of the upper curved board 143, the front inclined baffle 141 and the back baffle 142, and are connected to side edges of the upper curved board 143, the front inclined baffle 141 and the back baffle 142. In this embodiment, except for the pair of side protective boards 144, the protective case body 14 is divided into three pieces (which are the front inclined baffle 141, the upper curved board 143, and the back baffle 142) along and above the blast-exiting plane 140, but the present disclosure is not limited thereto. For example, the protective case body 14 can be divided into two or four pieces. It is worth mentioning that, the front inclined baffle 141, the upper curved board 143, and the back baffle 142 can be fittingly engaged with one another, which makes disassembling and replacement easier.

The impeller assembly 100 further includes an outer cover shell 15, and the outer cover shell 15 covers the protective case body 14. Referring to FIG. 6, a shape and a configuration of angles of the outer cover shell 15 substantially correspond to those of the protective case body 14, so that the outer cover shell 15 covers a top surface, two side surfaces, a front inclined surface, and a back surface of the protective case body 14. An input tube 22 and a hopper 21 can be fixed on the outer cover shell 15. In other words, a front inclined surface (corresponding to the blast-exiting plane 140) of the outer cover shell 15 has an inclined angle that is substantially equal to that of the front inclined baffle 141 (corresponding to the blast-exiting plane 140) of the protective case body 14.

As shown in FIG. 5, in this embodiment, the impeller assembly 100 further includes an impeller head 16 and a distributor 17. An inner side of the impeller head 16 is connected to one of the pair of rotary plates 11, an outer side of the impeller head 16 is connected to a motor M and the impeller head 16 is driven by the motor M. The distributor 17 is connected to the inner side of the impeller head 16 and movably positioned in the central holes 110 of the pair of rotary plates 11. The distributor 17 has a plurality of penetrating slots 170 formed therein.

Referring to FIG. 5, in this embodiment, the impeller assembly 100 further includes the input tube 22 that receives shots, and the input tube 22 is connected below the hopper 21. An exit end of the input tube 22 is fixedly connected to a control cage 18, the control cage 18 is fixedly positioned in the central holes 110 of the pair of the rotary plates 11, and the distributor 17 is rotatably positioned in the control cage 18. The control cage 18 has an exit 180, and is capable of controlling a position and a quantity of the shots to be shot out. The exit 180 of the control cage 18 in this embodiment faces upward. The exit end of the input tube 22 faces toward the distributor 17, and the plurality of penetrating slots 170 are aligned with the exit 180 of the control cage 18 in turn during the rotation. A tubular periphery of the control cage 18 is adjacent to, but not in contact with, the plurality of impeller blades 12.

When the shots (not shown in the figures) enters the impeller assembly 100 through the input tube 22, the distributor 17, being powered by the motor M, rotates the shots at a high speed. The shots pass through the exit 180 of the control cage 18 from the penetrating slots 170 of the distributor 17 and move in-between the plurality of impeller blades 12, and then are shot outward by the plurality of impeller blades 12 at a high speed.

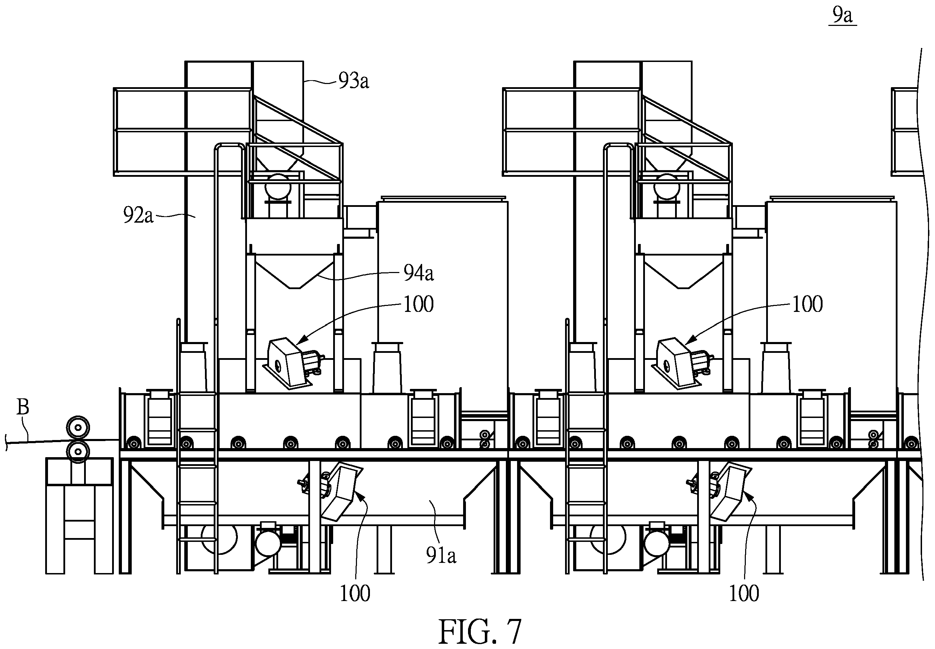

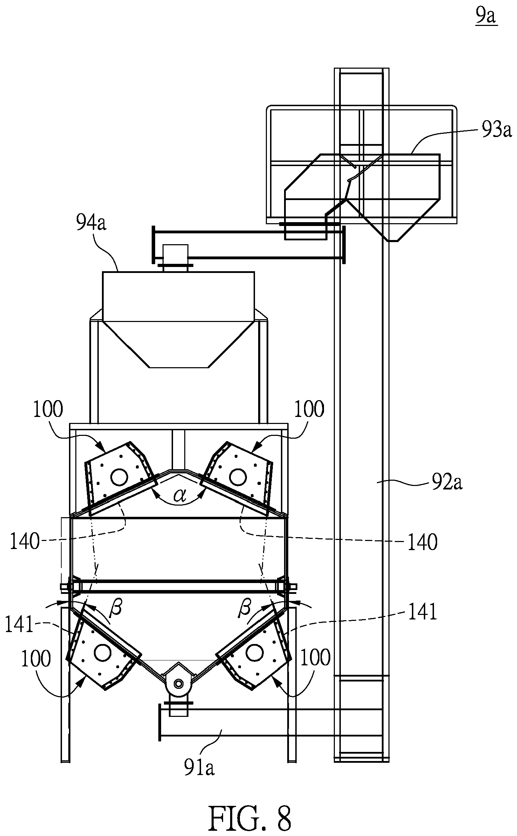

As shown in FIG. 7 and FIG. 8, the impeller assembly 100 of the present disclosure can be configured for various types of shot blasting machines. FIG. 7 and FIG. 8 illustrates the impeller assembly 100 being disposed in a shot blasting machine 9a that processes strips B. The shot blasting machine 9a includes a shot processing assembly 93a, a plurality of impeller assemblies 100, a collecting assembly 91a, and a lifting assembly 92a. The shot processing assembly 93a can provide shots (also known as grit abrasives, which are not shown in the figures), and the shot processing assembly 93a can either receive new shots, or process the collected shots to sort, filter out, and separate the shots qualified for reuse from those which are not. The shot processing assembly 93a has an output part 94a, and the plurality of impeller assemblies 100 are positioned under the output part 94a. Upon receiving the shots, the plurality of impeller assemblies 100 then accelerate and shoot the shots out. The collecting assembly 91a is positioned under the plurality of impeller assemblies 100, so as to collect the shots. The lifting assembly 92a transports the shots that are collected back to the shot processing assembly 93a. A quantity of the plurality of impeller assemblies 100 can be at least one, and the quantity can be determined according to practical requirements, such as the extent of surface finishing processed by the shot blasting machine or shot blasting angles that are required for workpieces to be processed.

As shown in FIG. 8, the shot blasting machine 9a has two pairs of the impeller assemblies 100 that are disposed apart from each other, and two adjacent impeller assemblies 100 of each of the two pairs of impeller assemblies 100 can be disposed on different planes, or disposed on the same plane. As shown in FIG. 8, an obtuse angle α is formed between the respective two of the blast-exiting plane 140 of each pair of the two pairs of the impeller assemblies 100, which is approximately 120 to 150 degrees. The front inclined baffle 141 of the protective case body 14 of each pair of the two pairs of the impeller assemblies 100 are disposed opposite to each other. In this embodiment, each of the front inclined baffles 141 is close to two side walls of a processing area, and each of the front inclined baffles 141 is inclined slightly inward with respect to one of the two side walls, forming an acute angle β of approximately 10 to 15 degrees, so as to prevent the shots from blasting the two side walls of the processing area.

For ease of illustration, for this embodiment along with other types of shot blasting machines as described below, components and assemblies in-between the output part 94a and the plurality of impeller assemblies 100 are not shown in the following figures. A person having ordinary skill in the art is able to realize that the output part 94a and the plurality of impeller assemblies 100 can be connected by funnels or tubes.

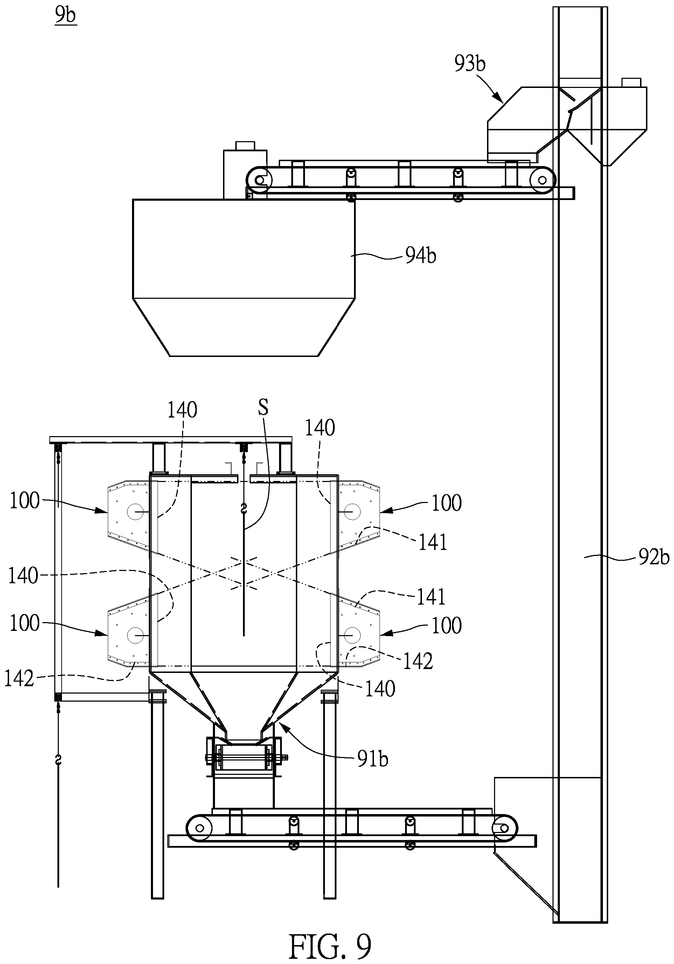

As shown in FIG. 9, at least one of the impeller assemblies 100 of the present disclosure can be disposed in a shot blasting machine 9b that processes hanging workpieces S. The shot blasting machine 9b has a plurality of workstations (not labeled in the figure), each of the plurality of workstations (not labeled in the figure) has four of the impeller assemblies 100, and each of the plurality of workstations has two of the impeller assemblies 100 disposed on two sides thereof. The blast-exiting plane 140 of each of the impeller assemblies 100 is disposed vertically, facing toward the hanging workpieces S. In other words, the blast-exiting planes 140 are parallel to the hanging workpieces S. The hanging workpieces S are moved along a rail across the processing area. Similar to the abovementioned machines, the shot blasting machine 9b has a shot processing assembly 93b, at least one of the impeller assemblies 100, a collecting assembly 91b, and a lifting assembly 92b. The shot processing assembly 93b provides the shots to the plurality of impeller assemblies 100 through an output part 94b. The respective front inclined baffles 141 of each of the two of the impeller assemblies 100 are disposed on the same side facing toward each other, and each extends in a direction that crosses each other, so as to sufficiently cover every part of the hanging workpieces S. In addition, each of the back baffles 142 extends toward a direction that is substantially perpendicular to the hanging workpieces S.

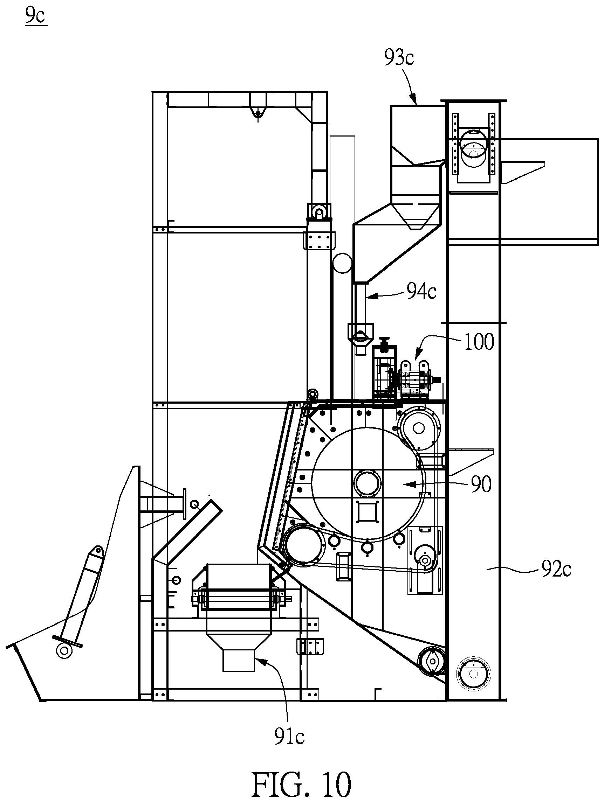

As shown in FIG. 10, the impeller assembly 100 can be disposed in a tumble and drum type shot blasting machine 9c, which is suitable for small workpieces and utilizes a loop belt to rotate a cylindrical processing area 90 that processes a batch of the small workpieces. The impeller assembly 100 is disposed above the cylindrical processing area 90, and after the small workpieces are poured into the cylindrical processing area 90, a hatch door (not labeled in the figure) is closed. Similar to the abovementioned machines, the shot blasting machine 9c has a shot processing assembly 93c, the impeller assembly 100, a collecting assembly 91c, and a lifting assembly 92c. The shot processing assembly 93c provides the shots to the impeller assemblies 100 through an output part 94c. The collecting assembly 91c is positioned below the hatch door (not labeled in the figure).

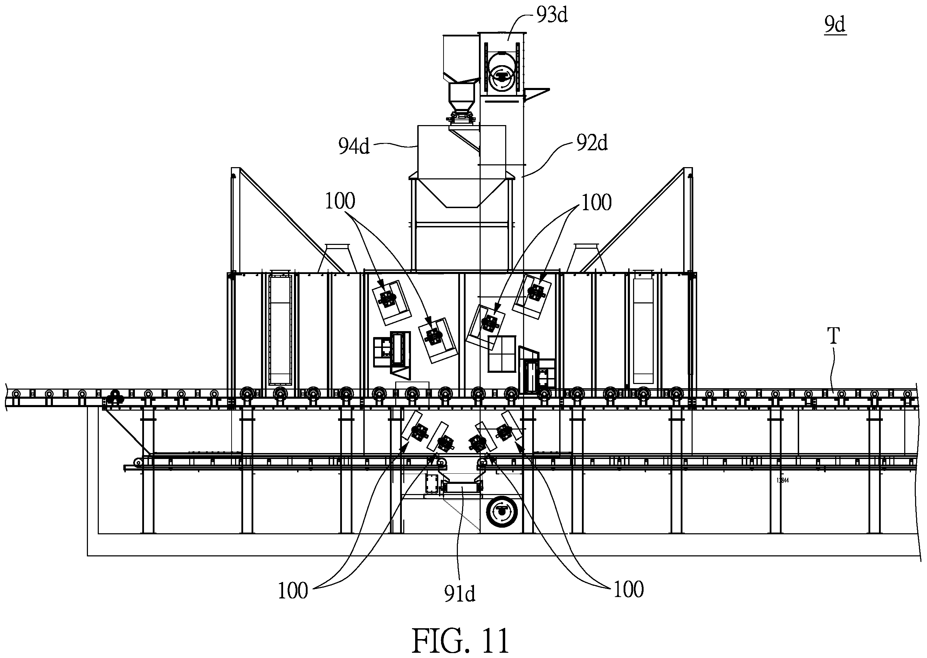

As shown in FIG. 11, the impeller assembly 100 of the present disclosure can be disposed in a horizontal load conveyor shot blasting machine 9d, which is suitable for processing complex workpieces having multiple surfaces, e.g. I-beams. A plurality of impeller assemblies 100 can be disposed at different angles to simultaneously process the multiple surfaces of the complex workpieces. In this embodiment, in order to process eight surfaces of an I-beam, eight of the plurality of impeller assemblies 100 are disposed. Similar to the abovementioned machines, the shot blasting machine 9d has a shot processing assembly 93d, a plurality of impeller assembly 100, a horizontal load conveyor T, a collecting assembly 91d, and a lifting assembly 92d. The shot processing assembly 93d provides the shots to the plurality of impeller assemblies 100 through an output part 94d. The collecting assembly 91d is positioned below a central position of the eight of the impeller assemblies 100.

One of the advantages of the present disclosure is that, through utilizing the centrifugal force generated when the plurality of impeller blades 12 are rotating at a high speed, the plurality of impeller blades 12 are more tightly engaged with the plurality of impeller blade grooves 111 of each of the pair of rotary plates 11. This configuration can be easily manufactured and assembled, which is beneficial in increasing the speed of the shots for surface finishing. Therefore, the present disclosure can not only provide a cleaning effect and enhance the surface roughness, but also increase the fatigue resistance and the surface hardness of the workpiece, thereby extending the service life of the workpiece.

The foregoing description of the exemplary embodiments of the disclosure has been presented only for the purposes of illustration and description and is not intended to be exhaustive or to limit the disclosure to the precise forms disclosed. Many modifications and variations are possible in light of the above teaching.

The embodiments were chosen and described in order to explain the principles of the disclosure and their practical application so as to enable others skilled in the art to utilize the disclosure and various embodiments and with various modifications as are suited to the particular use contemplated. Alternative embodiments will become apparent to those skilled in the art to which the present disclosure pertains without departing from its spirit and scope.

## Claims

1. An impeller device for spraying machines, comprising:
two oppositely arranged turntables, each of the turntables having a central hole, a plurality of blade grooves and a plurality of limiting grooves, the plurality of the blade grooves extending from the center hole toward the circumference of the turntable, each of the blade grooves having a groove bottom adjacent to the central hole and a groove top adjacent to the circumference, the inner width of the groove at the groove bottom being greater than the inner width of the groove at the groove top, the limiting grooves being arranged in the blade groove;
a plurality of blades, each of the blades having a blade part and two opposite side plate parts, the two side plate parts being respectively connected to both sides of the blade part, each side plate part having a limiting protrusion, the side plate part being accommodated in the blade groove, the limiting protrusion being accommodated in the limiting groove, the shape of the side plate corresponding to the shape of the blade groove, each of the side plates having a root width corresponding to the groove bottom and a top width corresponding to the groove top, the root width being greater than the top width;
a plurality of connecting rods, the plurality of connecting rods connecting two oppositely arranged turntables; and
a protective box that covers the two oppositely arranged turntables and the plurality of blades, a spray outlet being provided, and a spray outlet surface being formed between the spray outlet and the protective box.

2. The impeller device for spraying machines according to claim 1, wherein the protective box has a front oblique baffle and a back baffle, the back baffle is vertically arranged between the spray outlet surface, and there is a preset inclination angle between the front inclined baffle and the spray outlet surface.

3. The impeller device for spraying machines according to claim 2, wherein the limiting groove is adjacent to the groove bottom, and the free end of the blade extends beyond the circumference of the turntable.

4. The impeller device for spraying machines according to claim 1, wherein the limiting protrusion is clamped in the limiting groove.

5. The impeller device for spraying machines according to claim 1, wherein the plurality of blades and the plurality of connecting rods are alternately arranged at intervals along the circumferential direction of the turntable.

6. The impeller device for spraying machines according to claim 1, wherein the plurality of connecting rods are sandwiched between the two oppositely arranged turntables, and are respectively detachably connected to the two oppositely arranged turntables.

7. The impeller device for spraying machines according to claim 1, further comprising: a blade head and a distributor, the first end of the blade head being fixedly connected with one of the turntables, the second end of the blade head being connected with a driving device, the distributor being inserted in the center hole of the turntable and connected with the first end of the blade head, the side wall of the distributor being formed with a plurality of through grooves.

8. The impeller device for spraying machines according to claim 7, wherein the driving device comprises a motor arranged outside the protective box.

9. The impeller device for spraying machines according to claim 7, further comprising: a feed pipe and control cage for receiving spray particles; the outlet end of the feed pipe being fixedly connected with the control cage, the control cage being arranged in the center hole of the turntable, the distributor being inserted in the control cage and can rotate relative to the control cage, an outlet being provided on the side wall of the control cage.

10. The impeller device for spraying machines according to claim 9, wherein the control cage comprises a tubular outer wall; the plurality of blades are arranged around the tubular outer wall and are arranged at intervals from the tubular outer wall; the outlet is formed on the tubular outer wall.

11. The impeller device for spraying machines according to claim 9, further comprising: a hopper connected to the feed pipe.

12. The impeller device for spraying machines according to claim 1, wherein the blade portion is substantially perpendicular to the two oppositely arranged turntables.

13. The impeller device for spraying machines according to claim 2, wherein the protective box also comprises: one upper arc board and two opposite side protection boards, both ends of the upper arc board being respectively connected to the end of the forward inclined baffle far away from the spray outlet surface and the end of the rear baffle far away from the spray outlet surface, the two side protection boards being located oppositely on both sides of the upper arc board, the front oblique baffle and the rear baffle, and being connected with the side edges of the upper arc board, the front oblique baffle and the rear baffle.

14. The impeller device for spraying machines according to claim 1, further comprising: an outer cover shell covering the protective box.

15. A spraying machine platform, comprising:
a particle processing equipment, a collection equipment, a lifting equipment and at least one impeller device according to any one of claims 1 to 14;
wherein, the particle processing equipment is used for processing sprayed particles, and the particle processing equipment has a discharge part;
the impeller device being connected with the discharge part, and is used to receive the sprayed particles and spray the sprayed particles;
the collection device being connected to at least one of the impeller devices, and being used to recover the sprayed particles ejected from the impeller device;
the lifting equipment being respectively connected with the collection equipment and the particle processing equipment, and being used to return the sprayed particles recovered by the collection equipment to the particle processing equipment.

16. The spraying machine platform according to claim 15, wherein the spraying machine platform is provided with at least one set of the impeller device, wherein each set comprises: two impeller devices separated by a preset distance, the angle between the jet outlet surface of the impeller device and the connecting line between the two impeller devices being less than 90 degrees, and the two impeller devices being symmetrical about a preset plane, the preset plane being perpendicular to the connecting line, and the distances to the two impeller devices being equal.
